Europäisches Patentamt

European Patent Office

Office européen des brevets

(19)

(11) Numéro de publication: **0 332 498**
**A1**

# DEMANDE DE BREVET EUROPEEN

(21) Numéro de dépôt: **89400549.5**

(22) Date de dépôt: **28.02.89**

(51) Int. Cl.⁴: **H 01 G 9/24**
**H 01 G 9/02**

(30) Priorité: **01.03.88 FR 8802531**

(43) Date de publication de la demande:
**13.09.89 Bulletin 89/37**

(84) Etats contractants désignés: **DE FR**

(71) Demandeur: **THOMSON-CSF**
**51, Esplanade du Général de Gaulle**
**F-92800 Puteaux (FR)**

(72) Inventeur: **Boulloy, Georges Thomson-CSF**
**SCPI 51 Esplanade du Général de Gaulle**
**F-92045 Paris La Défense Cédex 67 (FR)**

**Bernard, Gilles Thomson-CSF**
**SCPI 51 Esplanade du Général de Gaulle**
**F-92045 Paris La Défense Cédex 67 (FR)**

(74) Mandataire: **Guérin, Michel et al**
**THOMSON-CSF SCPI 51, Esplanade du Général de**
**Gaulle**
**F-92045 PARIS LA DEFENSE CEDEX 67 (FR)**

(54) **Ruban métallique destiné à la fabrication de condensateurs électrolytiques à électrolyte solide, procédé de fabrication et condensateurs obtenus.**

(57) L'invention concerne les condensateurs électrolytiques à électrolyte solide dont la partie anodique est constituée de feuilles métalliques gravées et oxydées. L'électrolyte (54) de ces condensateurs est constitué par un matériau déposé sous forme de laque sur les feuilles métalliques (50).

Application à la fabrication de condensateurs électrolytiques à l'aluminium et à électrolyte solide.

FIG_13

EP 0 332 498 A1

Bundesdruckerei Berlin

**Description**

RUBAN METALLIQUE DESTINE A LA FABRICATION DE CONDENSATEURS ELECTROLYTIQUES A ELECTROLYTE SOLIDE, PROCEDE DE FABRICATION ET CONDENSATEURS OBTENUS

La présente invention concerne un ruban métallique destiné à la fabrication de condensateurs électrolytiques à électrolyte solide et plus particulièrement à la fabrication de ceux dont l'anode est en aluminium. Elle concerne également son procédé de fabrication.

Les condensateurs électrolytiques sont surtout utilisés à cause de leur grand capacité dans un volume réduit. Actuellement, trois familles de condensateurs électrolytiques à faible produit CXV sont présents sur le marché. On trouve des condensateurs à l'aluminium et à électrolyte liquide : l'anode est en aluminium et la cathode est un liquide électrolytique. On trouve aussi des condensateurs en tantale et à électrolyte solide : l'anode est au tantale et la cathode est un électrolyte semiconducteur solide. On trouve enfin des condensateurs à l'aluminium et à électrolyte solide : l'anode est en aluminium et la cathode est un électrolyte semiconducteur solide.

La dernière famille citée a connu récemment un développement certain. La société Philips a développé plusieurs gammes de condensateurs électrolytiques à l'aluminium et à électrolyte solide. L'anode est réalisée à partir d'une feuille enroulée ou pliée. Le procédé de fabrication à partir d'une anode en feuille comprend les étapes suivantes :
- découpe de la feuille d'aluminium,
- gravure de la feuille,
- pliage de la feuille d'aluminium gravée dans le cas de condensateurs radiaux on enroulement dans le cas de condensateurs axiaux,
- anodisation de la feuille pour former une mince couche d'alumine,
- formation de l'électrolyte solide (dioxyde de manganèse) par pyrolyse,
- mise en place d'un contact de cathode.

Le procédé de fabrication de ces condensateurs est assez compliqué. Il comprend une opération de pliage individualisé dans le cas des condensateurs radiaux ou d'enroulement individualisé dans le cas de condensateurs axiaux. L'étape de formation de l'électrolyte solide est la plus délicate. Plusieurs cycles de pyrolyse sont nécessaires (quatre en principe) et ces cycles doivent se dérouler dans des conditions de température et de durée bien déterminées. Ce sont des opérations très difficiles à maîtriser. En effet, le produit de base utilisé est une solution de nitrate de manganèse très agressive. La conversion en dioxyde de manganèse doit être très rapide. Une opération de post-formation est nécessaire pour réparer la couche endommagée par le dioxyde d'azote résultant de la pyrolyse.

On connaît, par le brevet français FR 2 583 216, un procédé de fabrication de condensateurs électrolytiques comprenant une étape de bobinage de rubans anodique et cathodique et d'un support d'électrolyte sur une roue de grand diamètre. Ce procédé a l'avantage de la simplicité procurée par la méthode de bobinage. Il permet d'obtenir des composants du type CMS (composants pour le montage en surface). L'électrolyte solide utilisé est de préférence le dioxyde de manganèse mais la possibilité d'utiliser un électrolyte organique est également mentionnée. On peut, par exemple, employer les sels du 7, 7, 8, 8 - tétracyanoquinodiméthane plus communément désigné sous l'appellation TCNQ. Théoriquement, ces sels sont très intéressants, mais leur utilisation en tant qu'électrolyte pour condensateurs pose beaucoup de problèmes de mise en oeuvre.

Pour remédier à cet inconvénient, l'invention propose un ruban métallique recouvert par laquage d'une couche d'électrolyte et permettant la fabrication d'un nouveau type de condensateurs électrolytiques à électrolyte solide réalisés par empilage ou par bobinage.

L'invention a donc pour objet un ruban métallique destiné à la fabrication de condensateurs électrolytiques à électrolyte solide, le ruban étant gravé et oxydé, caractérisé en ce quil est recouvert d'une couche d'électrolyte solide constituée par un matériau déposé sous forme de laque.

L'invention a aussi pour objet un procédé de fabrication d'un ruban métallique tel que celui cité ci-dessus, caractérisé en ce qu'il comprend une étape consistant à déposer par laquage ledit électrolyte sur le ruban métallique gravé et oxydé.

L'invention a encore pour objet un condensateur à électrolyte solide, caractérisé en ce qu'il est formé d'un enroulement ou d'un empilement de feuilles obtenues à partir du ruban métallique défini ci-dessus.

L'invention sera mieux comprise, et d'autres avantages apparaîtront, à la lecture de la description qui va suivre et grâce aux dessins annexés parmi lesquels :
- la figure 1 représente la section schématique d'un ruban d'aluminium gravé et oxydé,
- la figures 2 et 3 illustrent une première manière de réaliser selon l'invention les couches d'électrolyte et d'isolant sur le ruban d'aluminium,
- les figures 4 et 5 illustrent une seconde manière de réaliser selon l'invention les couches d'électrolyte et d'isolant,
- les figures 6 et 7 illustrent une troisième manière de réaliser selon l'invention les couches d'électrolyte et d'isolant,
- les figures 8 et 9 illustrent une quatrième manière de réaliser selon l'invention les couches d'électrolyte et d'isolant,
- les figures 10 et 11 illustrent deux techniques connues de laquage,
- les figures 12 à 15 représentent différentes manières d'obtenir des condensateurs électrolytiques selon l'invention.

La description va porter plus précisément sur les condensateurs à l'aluminium, mais ceci à titre d'exemple de réalisation. L'invention peut cependant s'appliquer aux condensateurs électrolytiques pour lesquels le matériau anodique est de nature différente, par exemple le tantale. De même, on choisira comme électrolyte un sel de TCNQ mais toujours à titre d'exemple non limitatif. D'autres électrolytes pouvant être déposés par une technique de laquage pourront être employés.

Les sels de 7, 7, 8, 8 - tétracyanoquinodiméthane (en abrégé TNCQ) et en particulier le N-n butylisoquinolinium de TCNQ ont l'avantage de présenter une bonne conductibilité électrique. Cette valeur de conductibilité est compatible avec une utilisation dans la fabrication des condensateurs électrolytiques.

Le N-n butylisoquinolinium de TCNQ est normalement formé à l'état de poudre cristalline. Sa fixation sur les métaux filmogènes et l'aluminium en particulier n'est pas facile. les études concernant les diverses techniques d'adhérence des sels de TCNQ sur ce type de support ont montré que la fixation d'un sel de TCNQ sur un métal filmogène avant une surface anodisée par contact du métal avec le sel à l'état liquide, suivi de sa solidification, conduit à un condensateur à électrolyte solide possédant d'excellentes qualités. Par ce procédé, il est nécessaire que le sel de TCNQ liquéfié soit refroidi assez rapidement pour provoquer sa solidification, sinon il se décomposerait. Ce procédé s'avère délicat à mettre en oeuvre en laboratoire. Il le devient d'autant plus pour des applications industrielles lorsqu'il s'agit de maîtriser un temps de chauffe de façon reproductible.

Pour fabriquer des condensateurs électrolytiques à l'aluminium, du type empilé, bobiné ou plié, on part de feuilles d'aluminium gravées et oxydées livrées par des fabricants sous forme de laizes. Ces laizes, dont la largeur habituelle est de 25 à 30 cm, sont alors découpés en rubans de largeur appropriée à la taille des condensateurs désirés. La découpe a pour conséquence de fournir des rubans dont les tranches ne sont pas oxydées. D'autre part, à cause du transport des feuilles et de leur manipulation, certaines zones d'oxyde des faces principales ont été endommagées. La première opération à effectuer consistera donc à reformer la couche d'oxyde endommagée sur les rubans d'aluminium. Que les condensateurs soient du type empilé ou bobiné, l'une des tranches des rubans devra être contacté électriquement à l'une des électrodes du condensateur. On peut donc ne pas reformer de couche d'oxyde au niveau de la tranche à contacter ou, ce qui est plus simple, reformer la couche d'oxyde à ce niveau et la brosser par la suite. Dans ce qui suit, on considérera, à titre d'exemple, le cas où les deux tranches des rubans sont reformées.

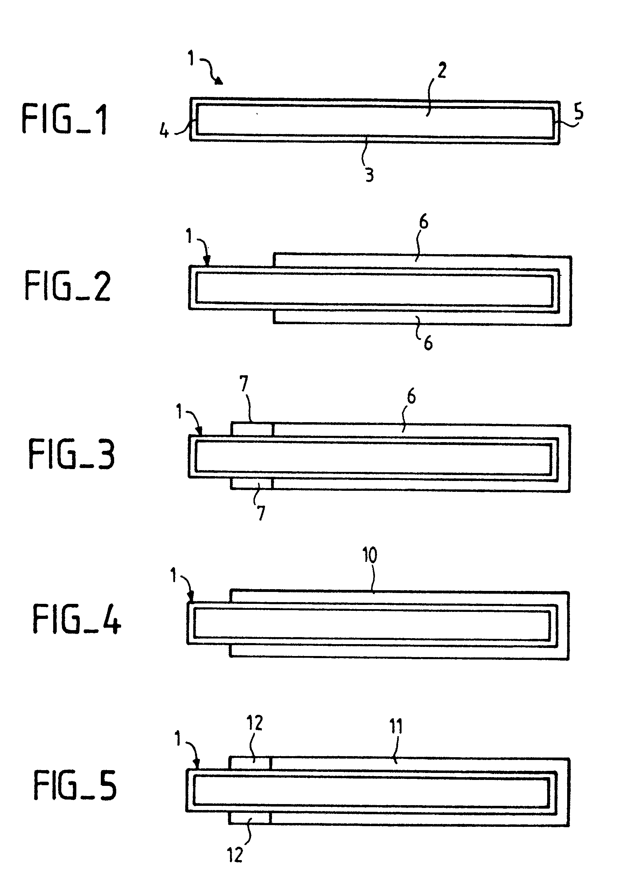

La figure 1 représente la section, suivant la largeur et l'épaisseur, d'un ruban d'aluminium gravé et oxydé 1. Il est constitué d'une bande 2 d'aluminium très pur, recouverte d'une couche d'oxyde 3. Après reformation selon une méthode connue, les tranches 4 et 5 sont également recouvertes d'oxyde $Al_2O_3$.

Le ruban d'aluminium gravé et oxydé sera partiellement recouvert d'électrolyte. En effet, comme il sera montré plus loin, il est préférable que certaines zones du ruban destiné à devenir la partie anodique des condensateurs soient isolées. L'association électrolyte-isolant peut être réalisée de différentes façons.

On peut procéder de la façon illustré par les figures 2 et 3. Le ruban 1 est partiellement recouvert, sur ses deux faces principales et sur une tranche, d'une couche d'électrolyte 6 laissant subsister des marges latérales (figure 2). Le ruban 1 reçoit aussi des couches d'isolant 7 sur les marges latérales et en continuité avec les couches d'électrolyte. L'isolant 7 ne recouvre que partiellement les marges correspondantes.

On peut aussi procéder de la façon illustrée par les figures 4 et 5. Le ruban 1 est recouvert d'une couche d'électrolyte 10 qui recouvre d'une manière continue une tranche et les deux faces principales du ruban, à l'exception de deux marges contiguës à l'autre tranche du ruban (figure 4). Par passivation des parties de l'électrolyte situées à proximité des marges, on retrouve la structure de la figure 3. C'est ce que montre la figure 5 où l'on voit que chaque face principale du ruban 1 est recouverte d'une couche d'électrolyte 11 délimitée par des parties isolantes 12.

On peut partir d'un ruban gravé et oxydé de largeur double de la largeur des feuilles anodiques à obtenir, recouvrir le ruban d'électrolyte et d'isolant et le découper en deux dans le sens de la longeur.

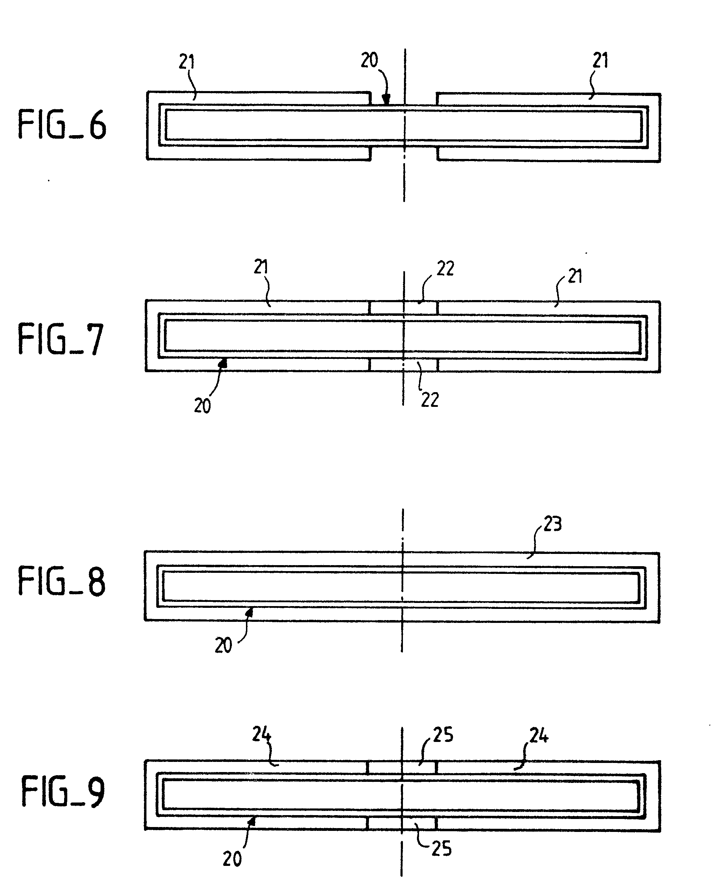

Les figures 6 et 7 représentent une version où l'électrolyte et l'isolant sont au départ de natures différentes. Figure 6, on a déposé sur le ruban de largeur double 20 gravé et oxydé une couche d'électrolyte 21 qui recouvre le ruban à l'exception d'une bande centrale sur chaque face principale du ruban. Sur ces bandes centrales, on vient déposer un isolant 22. La découpe effectuée selon l'axe fournira deux rubans à partir desquels seront élaborés les condensateurs. Elle procure une tranche non oxydée, prête à être contactée.

Les figures 8 et 9 représentent une autre version où l'électrolyte et l'isolant sont au départ le même matériau. Figure 8, on a déposé sur le ruban de largeur double 20 gravé et oxydé, une couche d'électrolyte 23 qui le recouvre entièrement. On passive l'électrolyte selon une bande centrale sur chaque face principale du ruban. On obtient une structure analogue à celle de la figure 7 : deux couches d'électrolyte 24 séparées par deux couches d'isolant 25.

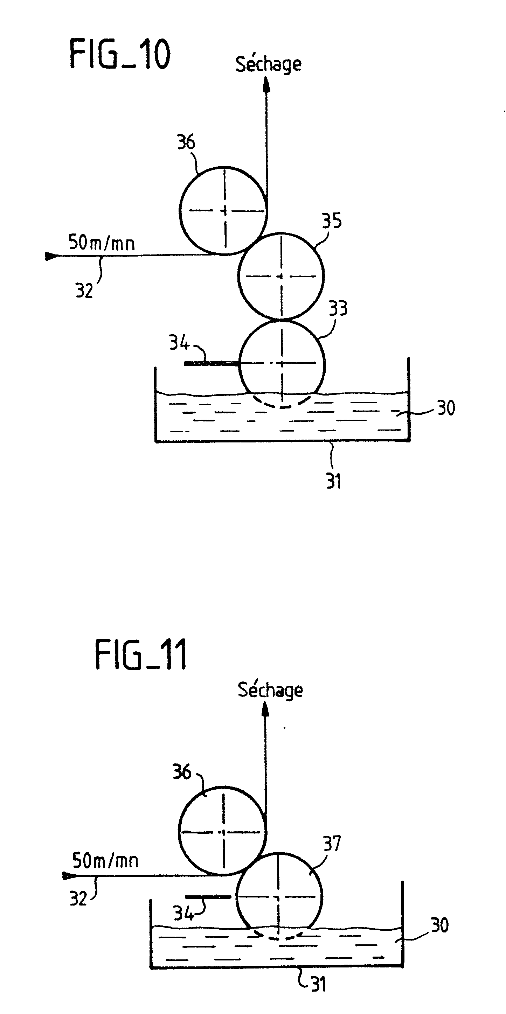

Le laquage peut être réalisé par des techniques connues telles que la flexographie ou l'héliographie. Les différences entre ces deux techniques sont illustrées par les figures 10 et 11.

Dans la technique de flexographie, illustrée par la figure 10, l'électrolyte à déposer se présente sous la forme d'un polymère dissous dans un solvant. Cette solution 30 se trouve dans un bac 31. Le dispositif de mise en oeuvre comprend trois cylindres qui permettent l'entraînement du ruban 32 à laquer et qui sont mobiles en rotation. Le cylindre trame 33, qui plonge dans la solution 30, entraîne par sa rotation un film de la solution. L'épaisseur de ce film est égalisée au passage devant la racle 34. Le film est ensuite transféré par le cylindre transfert 35 sur le ruban 32. Le cylindre transfert 35 et le cylindre support 36 permettent l'entraînement du ruban à une vitesse qui peut être de 50 m/mn. Le ruban est ensuite séché pour permettre l'évaporation du solvant de la solution. Le dispositif tel que représenté à la figure 10 ne permet le laquage que l'une seule face du ruban à la fois. En doublant le nombre de cylindres, il est possible de laquer les deux faces en même temps.

Dans la technique d'héliographie, illustrée par la figure 11 où les mêmes références que dans la figure 10 représentent les mêmes éléments, le cylindre 37 assure à la fois le rôle de cylindre trame et de cylindre transfert. Là encore, on peut doubler le nombre de cylindres pour obtenir un laquage simultané des deux faces du ruban.

Si on veut laquer également les tranches du ruban, ceci peut être obtenu en plaçant les cylindres verticalement.

A titre d'exemple, les sels de TCNQ peuvent être mis en solution dans un solvant tel que l'acétonitrile, la N-méthyl 2 pyrrolidone ou le diméthyl acétamide. En portant la solution à une température de l'ordre de 100°C, on assure une bonne dissolution du polymère et une bonne homogénéité. La température de séchage correspond au moins à la température d'évaporation du solvant. Les épaisseurs maximales de laque déposée sont comprises entre 10 et 20 μ.

Lorsque les parties isolantes sont constituées par un matériau de nature différente de celle de l'électrolyte, ce matériau isolant peut être déposé avant ou après l'électrolyte en utilisant une technique de masquage. Il est préférable que l'isolant ait au moins la même épaisseur que la couche d'électrolyte. L'isolant peut être déposé par laquage à condition qu'il soit un polymère laquable. Il peut aussi être déposé par pulvérisation, au travers d'un masque, de particules isolantes électriquement.

Lorsque les parties isolantes sont constituées par un matériau de même nature que celle de l'électrolyte, on peut inhiber sa propriété de conductivité soit par passage localisé dans un solvant approprié sous des conditions de pression et de température définies, soit par choc thermique localisé. Dans le cas d'un sel de TCNQ, le solvant de passivation peut être le diméthyl formamide. La passivation peut être obtenue à température ambiante ou vers 100°C pour activer la réaction de décomposition. Le choc thermique, quant à lui, peut être obtenu par laser ou par une scie portée à haute température (supérieure à 220°C) lorsque le ruban doit être découpé (cas illustré par les figures 8 et 9).

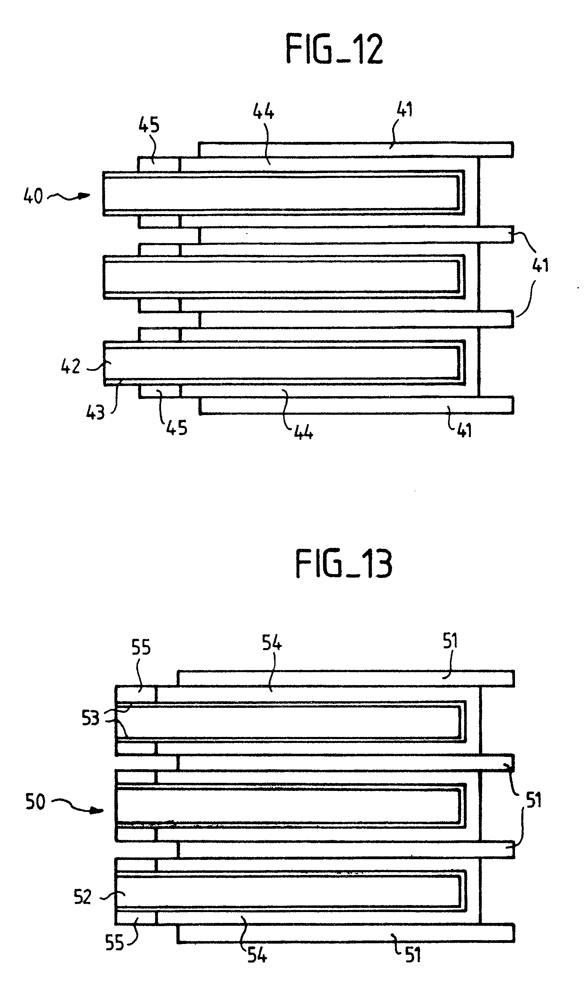

La figure 12 montre un exemple d'utilisation d'un ruban capacitif correspondant soit à la figure 3, soit à la figure 5. On a réalisé un condensateur électrolytique par empilement de feuilles anodiques 40 en alternance avec des contacts de cathodes 41. Chaque feuille anodique 40 est constituée d'une bande d'aluminium 42 recouverte d'une couche d'oxyde 43. Par brossage, on a retiré la couche d'oxyde de la tranche à contacter. Les feuilles anodiques supportent une couche d'électrolyte 44 sur chacune de leurs faces et des couches d'isolant 45 correspondant à celles des figures 3 et 5 (isolant rapporté ou électrolyte passivé). Par pulvérisation de métal (schoopage) des faces latérales de l'empilement, on obtient une électrode d'anode et une électrode de cathode non représentées.

La figure 13 montre un exemple d'utilisation d'un ruban capacitif correspondant soit à la figure 7, soit à la figure 9. On retrouve, comme à la figure 12, un empilement de feuilles anodiques 50 en alternance avec des contacts de cathodes 51. Chaque feuille anodique 50 est constituée d'une bande d'aluminium 52 recouverte d'une couche d'oxyde 53. Aucun brossage n'est nécessaire dans ce cas puisque les feuilles anodiques ont été découpées à partir d'un ruban déjà reformé. Les feuilles anodiques supportent des couches d'électrolyte 54 et des couches d'isolant 55 correspondant à celles des figures 7 et 9 (isolant rapporté on électrolyte passivé). Par schoopage des faces latérales de l'empilement, on obtient une électrode d'anode et une électrode de cathode non représentées.

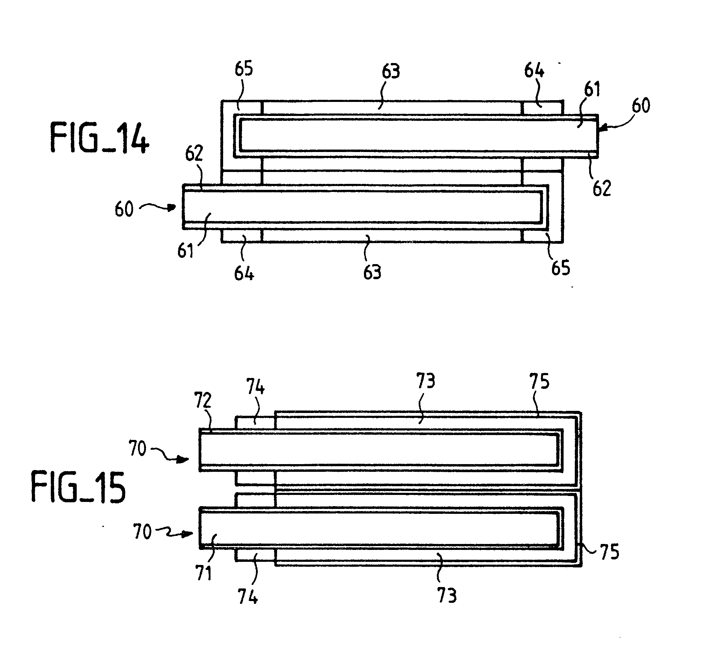

Les figures 12 et 13 concernent des condensateurs électrolytiques polarisés. On peut obtenir des condensateurs non polarisés par superposition alternée de rubans capacitifs. La figure 14 illustre une telle configuration avec, à titre d'exemple, des rubans du type décrit aux figures 3 et 5 mais comportant en plus des extrémités de rubans isolées. On reconnaît sous la référence 60 une feuille anodique constituée d'une bande d'aluminium 61 recouverte d'une couche d'oxyde 62 et dont les tranches à contacter ont été brossées. Les feuilles anodiques supportent des couches d'électrolyte 63 et des couches d'isolant 64 et 65 (isolant rapporté ou électrolyte passivé). Par schoopage des faces latérales des feuilles superposées, on obtient les deux électrodes du composant capacitif.

Au lieu d'utiliser des feuilles de cathode pour assurer les contacts électriques, comme dans les figures 12 et 13, on peut déposer sur le ruban capacitif un matériau bon conducteur de l'électricité. C'est ce qui est représenté à la figure 15. On reconnaît sous la référence 70 les feuilles anodiques constituées de bandes d'aluminium 71 recouvertes de couches d'oxyde 72 et dont les tranches à contacter ont été brossées. Les feuilles anodiques supportent des couches d'électrolyte 73 et des couches d'isolant 74 correspondant à celles des figures 7 et 9 (isolant rapporté ou électrolyte passivé). Les couches d'électrolyte 73 sont recouvertes de couches 75 d'un matériau bon conducteur de l'électricité. Ce matériau peut être du graphite ou un revêtement métallique. Selon les cas il sera déposé par évaporation sous vide, pulvérisation cathodique, projections de particules (minérales, organiques ou métalliques) en fusion ou en phase solvant. Il est avantageux que le matériau utilisé soit peu ou pas oxydable pour que le condensateur subisse sans dommage les tests de chaleur humide. Par schoopage des faces latérales de l'empilement, on obtient une électrode d'anode et une électrode de cathode non représentées.

Il entre dans le cadre de la présente invention de réaliser d'autres condensateurs électrolytiques que ceux illustrés par les figures 12 à 15.

L'invention procure de nombreux avantages. Les rubans capacitifs laqués permettent un contrôle simple et rapide de leurs caractéristiques. Ils constituent des condensateurs élémentaires sur lesquels on peut périodiquement effectuer des mesures de capacité, de courant de fuites, de tangente de l'angle de pertes. Le procédé de fabrication pour obtenir des composants capacitifs est simple et permet un travail en continu. L'épaisseur d'électrolyte déposé par laquage étant très faible, la capacité volumique des condensateurs obtenus est importante.

L'invention permet enfin d'obtenir des condensateurs électrolytiques de tous les types possibles : empilés ou bobinés.

**Revendications**

1. Ruban métallique destiné à la fabrication de condensateurs électroniques à électrolyte solide, le ruban étant gravé et oxydé (1,20), caractérisé en ce qu'il est recouvert d'une couche d'électrolyte solide constituée par un matériau déposé sous forme de laque (6, 11, 21, 24).

2. Ruban métallique selon la revendication 1, caractérisé en ce qu'il est constitué à partir d'une feuille d'aluminium.

3. Ruban métallique selon l'une des revendications 1 ou 2, caractérisé en ce que l'électrolyte (6, 11, 21, 24) est un sel de tétracyanoquinodiméthane.

4. Ruban métallique selon la revendication 3, caractérisé en ce que ledit sel est le N-n butylisoquinolinium de tétracyanoquinodiméthane.

5. Ruban métallique selon l'une quelconque des revendications 1 à 4, caractérisé en ce qu'il supporte également des couches d'isolant (7, 12, 22, 25) destinées à la protection électrique de l'électrolyte.

6. Procédé de fabrication d'un ruban métallique selon la revendication 1, caractérisé en ce qu'il comprend une étape consistant à déposer par laquage ledit électrolyte (6,11,21,24) sur le ruban métallique gravé et oxydé (1,20).

7. Procédé selon la revendication 6, caractérisé en ce que le ruban métallique (1,20) devant supporter également des couches d'isolant (7,22) destinées à la protection électrique de l'électrolyte, le procédé comprend en outre une étape de dépôt de ces couches d'isolant.

8. Procédé selon la revendication 6, caractérisé en ce que, le ruban métallique (1,20) devant supporter également des couches d'isolant destinées à assurer la protection électrique de l'électrolyte, le procédé comprend une étape consistant à passiver des zones déterminées de l'électrolyte pour constituer lesdites couches d'isolant (12,25).

9. Procédé selon la revendication 8, caractérisé en ce que la passivation de l'électrolyte est obtenue par passage des zones à passiver dans un solvant de passivation.

10. Procédé selon la revendication 8, caractérisé en ce que la passivation desdites zones d'électrolyte est obtenue par choc thermique.

11. Procédé selon l'une quelconque des revendications 6 à 10, caractérisé en ce que le ruban est obtenu par découpe longitudinale d'un ruban métallique (20) de largeur double et recouvert de couches d'électrolyte (21,24) et d'isolant (22,25).

12. Procédé selon la revendication 11, caractérisé en ce que la découpe est effectuée dans une zone des rubans recouverts d'une couche d'isolant (22,25).

13. Procédé selon les revendications 10 et 11 prises ensemble, caractérisé en ce que la passivation est obtenue lors de la découpe longitudinale des rubans métalliques (20), le choc thermique étant associé aux moyens mis en oeuvre pour réaliser cette découpe.

14. Condensateur à électrolyte solide, caractérisé en ce qu'il est formé d'un enroulement ou d'un empilement de feuilles obtenues à partir du ruban métallique selon l'une quelconque des revendications 1 à 5.

FIG_1

FIG_2

FIG_3

FIG_4

FIG_5

FIG_6

FIG_7

FIG_8

FIG_9

## FIG_10

## FIG_11

## FIG_12

## FIG_13

FIG_14

FIG_15

| | Office européen | | | |
|---|---|---|---|---|

**Office européen des brevets**

# RAPPORT DE RECHERCHE EUROPEENNE

Numero de la demande

EP 89 40 0549

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 247 797 (MATSUSHITA ELECTRIC INDUSTRIAL CO. LTD) * Page 5, ligne 16 - page 6, ligne 10; page 7, lignes 1-15; figure 2 * | 1-3,6 | H 01 G 9/24 H 01 G 9/02 |
| A | --- | 5,7 | |
| X | GB-A-2 153 148 (SANYO ELECTRIC CO. LTD) * Page 1, lignes 5-7,19-22,26-29,36-38; page 2, lignes 17-35 * | 1-3 | |
| A | --- | 4-10 | |
| D,A | FR-A-2 583 216 (COMPAGNIE EUROPEENNE DES COMPOSANTS ELECTRONIQUES) * Figure 1; page 7, lignes 7-18 * --- | 11,14 | |
| A | DE-A-1 157 707 (TELEFUNKEN PATENTVERWERTUNGSGESELLSCHAFT mbH) * Colonne 2, ligne 48 - colonne 3, ligne 4; colonne 4, lignes 13-26; figures 1,2 * ----- | 7,12 | DOMAINES TECHNIQUES RECHERCHES (Int. Cl.4) H 01 G |

Le présent rapport a été établi pour toutes les revendications

| Lieu de la recherche | Date d'achèvement de la recherche | Examinateur |
|---|---|---|
| LA HAYE | 09-06-1989 | MOMENE Y ARROYO M.E. |

EPO FORM 1503 03.82 (P0402)